(19) **Europäisches Patentamt / European Patent Office / Office européen des brevets**

(11) **EP 4 669 011 A1**

(12) **EUROPEAN PATENT APPLICATION**
published in accordance with Art. 153(4) EPC

(43) Date of publication:
**24.12.2025 Bulletin 2025/52**

(21) Application number: **24734781.8**

(22) Date of filing: **16.02.2024**

(51) International Patent Classification (IPC):
*H04W 74/08* (2024.01)    *H04W 74/00* (2009.01)
*H04W 72/04* (2023.01)    *H04W 72/0457* (2023.01)
*H04W 72/21* (2023.01)    *H04W 72/23* (2023.01)
*H04W 72/12* (2023.01)    *H04L 27/26* (2006.01)

(52) Cooperative Patent Classification (CPC):
H04L 27/26; H04W 72/04; H04W 72/0457;
H04W 72/12; H04W 72/21; H04W 72/23;
H04W 74/00; H04W 74/08

(86) International application number:
**PCT/KR2024/095330**

(87) International publication number:
**WO 2024/172615 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 US 202363446316 P
05.04.2023 US 202363457381 P
12.05.2023 KR 20230062038
09.08.2023 KR 20230104460**

(71) Applicant: **LG Electronics Inc.
Seoul 07336 (KR)**

(72) Inventors:
• **AHN, Seungjin**
  **Seoul 06772 (KR)**
• **KIM, Jaehyung**
  **Seoul 06772 (KR)**
• **YANG, Suckchel**
  **Seoul 06772 (KR)**
• **LEE, Sunghoon**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **DEVICE AND METHOD FOR CONTROLLING TERMINAL PROCESSING TIME DURING RANDOM ACCESS PROCEDURE IN WIRELESS COMMUNICATION SYSTEM**

(57) The present disclosure relates to controlling a terminal processing time during a random access procedure in a wireless communication system, and a method performed by a terminal may include transmitting a message A for a random access procedure, receiving downlink control information (DCI) that schedules a message B, receiving a physical downlink shared channel (PDSCH) scheduled by the DCI through physical resource blocks (PRBs) allocated by the DCI, and in case a transport block (TB) provided by the PDSCH is not received properly or a random access preamble identifier (RAPID) associated with physical random access channel (PRACH) transmission from the terminal is not identified, transmitting the PDSCH, and in case the PDSCH includes a success random access response (success RAR), transmitting acknowledge (ACK) information through the PUCCH so that a time between the last symbol of the PDSCH and a first symbol of the PUCCH is not smaller than a second time length

```
        START
          │ S1101
  RECEIVE MESSAGE B
          │ S1103
DETERMINE PROCESSING
 TIME FOR MESSAGE B
          │ S1105
 TRANSMIT ACK/NACK
AFTER PROCESSING TIME
          │
         END
```

**FIG. 11**

EP 4 669 011 A1

**Description**

Technical Field

The present disclosure relates to a wireless communication system, and mor particularly, to an apparatus and a method for controlling terminal processing time during a random access procedure in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure may provide an apparatus and a method for smoothly performing a random access procedure in a wireless communication system.

The present disclosure may provide an apparatus and a method for determining processing time of a terminal when performing a random access procedure in a wireless communication system.

The present disclosure may provide an apparatus and a method for determining processing time of a terminal after physical shared control channel (PDSCH) transmission when performing a random access procedure in a wireless communication system.

The present disclosure may provide an apparatus and a method for allocating a resource for transmitting ACK/NACK when performing a 2-step random access procedure in a wireless communication system.

The present disclosure may provide an apparatus and a method for allocating a resource for transmitting ACK/NACK based on a size of sub-carrier spacing (SCS) when performing a 2-step random access procedure in a wireless communication system.

The present disclosure may provide an apparatus and a method for determining processing time of a terminal based on a size of SCS after PDSCH transmission when performing a 2-step random access procedure in a wireless communication system.

The present disclosure may provide an apparatus and a method for allocating a resource for transmitting ACK/NACK based on a size of resource block group (RBG) when performing a 2-step random access procedure in a wireless communication system.

The present disclosure may provide an apparatus and a method for determining processing time of a terminal based on a size of RBG after PDSCH transmission when performing a 2-step random access procedure in a wireless communication system.

The present disclosure may provide an apparatus and a method for determining a time limit for retransmission of a message A when an error of a random access procedure occurs in a wireless communication system.

The present disclosure may provide an apparatus and a method for determining a time limit for retransmission of a message A based on a size of SCS when an error of a random access procedure occurs in a wireless communication system.

The present disclosure may provide an apparatus and a method for determining a time limit for retransmission of a message A based on a size of RBG when an error of a random access procedure occurs in a wireless communication system.

The present disclosure may provide an apparatus and a method for determining a time limit for retransmission of a message A based on a type of error when an error of a random access procedure occurs in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method performed by a terminal in a wireless communication system may include transmitting a message A for a random access procedure, receiving downlink control information (DCI) that schedules a message B, receiving a physical downlink shared channel (PDSCH) scheduled by the DCI through physical resource blocks (PRBs) allocated by the DCI, and in case the DCI is decoded using an MsgB-radio network temporary identifier (RNTI), based on at least one condition being satisfied, transmitting a physical random access channel (PRACH) no later than a first time length after a last symbol of the PDSCH or transmitting acknowledge (ACK) information through a physical uplink control channel (PUCCH) so that a time between the last symbol of the PDSCH and a first symbol of the PUCCH is not smaller than a second time length.

As an example of the present disclosure, a terminal in a wireless communication system may include a transceiver and a processor coupled with the transceiver, and the processor may be configured to transmit a message A for a random access procedure, to receive downlink control information (DCI) that schedules a message B, to receive a physical downlink shared channel (PDSCH) scheduled by the DCI through physical resource blocks (PRBs) allocated by the DCI, and in case the DCI is decoded using an MsgB-radio network temporary identifier (RNTI), based on at least one condition being satisfied, to transmit a physical random access channel (PRACH) no later than a first time length after a last symbol of the PDSCH or to transmit acknowledge (ACK) information through a physical uplink control channel (PUCCH) so that a time between the last symbol of the PDSCH and a first symbol of the PUCCH is not smaller than a second time length.

As an example of the present disclosure, a communication device may include at least one processor and at least one computer memory coupled with the at least one processor and storing an instruction that instructs operations when executed by the at least one processor, and the operations may include transmitting a message A for a random access procedure, receiving downlink control information (DCI) that schedules a message B, receiving a physical downlink shared channel (PDSCH) scheduled by the DCI through physical resource blocks (PRBs) allocated by the DCI, and in case the DCI is decoded using an MsgB-radio network temporary identifier (RNTI), based on at least one condition being satisfied, transmitting a physical random access channel (PRACH) no later than a first time length after a last symbol of the PDSCH or transmitting acknowledge (ACK) information through a physical uplink control channel (PUCCH) so that a time between the last symbol of the PDSCH and a first symbol of the PUCCH is not smaller than a second time length.

As an example of the present disclosure, a non-transitory computer-readable medium storing at least one instruction includes the at least one instruction that is executable by a processor, and the at least one instruction may instruct a device to transmit a message A for a random access procedure, to receive downlink control information (DCI) that schedules a message B, to receive a physical downlink shared channel (PDSCH) scheduled by the DCI through physical resource blocks (PRBs) allocated by the DCI, and in case the DCI is decoded using an MsgB-radio network temporary identifier (RNTI), based on at least one condition being satisfied, to transmit a physical random access channel (PRACH) no later than a first time length after a last symbol of the PDSCH or to transmit acknowledge (ACK) information through a physical uplink control channel (PUCCH) so that a time between the last symbol of the PDSCH and a first symbol of the PUCCH is not smaller than a second time length.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, a random access procedure may be smoothly performed.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system applicable to the present disclosure.
FIG. 2 illustrates an example of a wireless device applicable to the present disclosure.
FIG. 3 illustrates a frame structure in a wireless communication system applicable to the present disclosure.
FIG. 4 illustrates an example of a resource grid in a wireless communication system applicable to the present disclosure.
FIG. 5 illustrates an example of a physical resource block in a wireless communication system applicable to the present disclosure.
FIG. 6 illustrates an example of a slot structure in a wireless communication system applicable to the present disclosure.
FIG. 7 illustrates examples of physical channels and an example of a general signal transmission and reception method using the physical channels used in a wireless communication system applicable to the present disclosure.
FIG. 8A and FIG. 8B illustrate an example of a procedure of 2-step PRACH that is applicable to the present disclosure.
FIG. 9 illustrates an example of an MAC CE structure of a message B that is applicable to the present disclosure.
FIG. 10A and FIG. 10B illustrate examples of field structure of a RAR message that is applicable to the present disclosure.
FIG. 11 illustrates an example of a procedure of transmitting feedback information on a message B based on an additional marginal time according to an embodiment of the present disclosure.
FIG. 12 illustrates an example of a procedure of identifying a bandwidth of a channel by using a radio network temporary identifier (RNTI) according to an embodiment of the present disclosure.
FIG. 13 illustrates an example of a procedure of transmitting feedback information on a message B based on a feedback time indicator according to an embodiment of the present disclosure.
FIG. 14 illustrates an example of a procedure of retransmitting a signal including a preamble according to an embodiment of the present disclosure.
FIG. 15 illustrates an example of a procedure of determining whether or not to use a random access resource according to an embodiment of the present disclosure.
FIG. 16 illustrates an example of a random access procedure that is applicable to the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

## Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

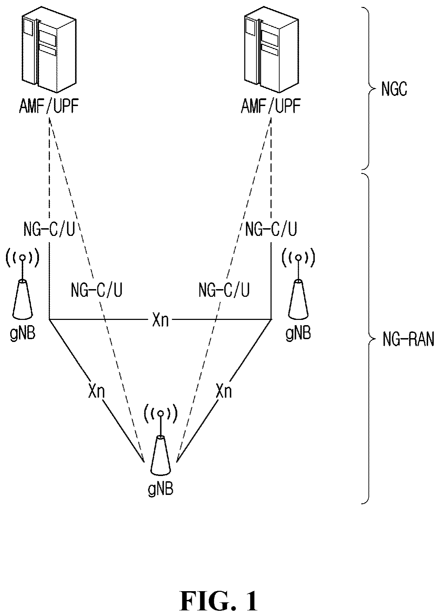

FIG. 1 exemplifies a structure of a wireless communication system applicable to the present disclosure. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

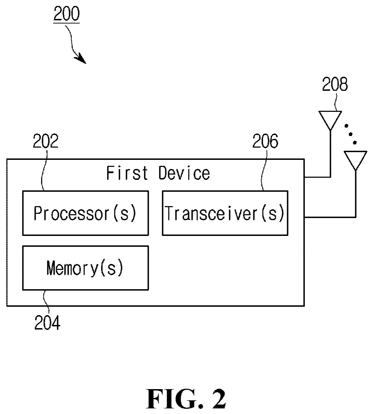

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information related to an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs related to sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

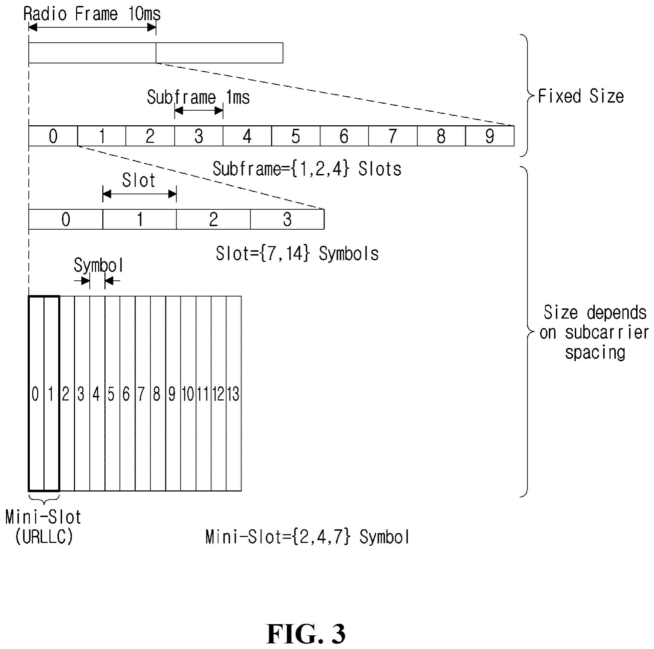

FIG. 3 exemplifies a frame structure in a wireless communication system applicable to the present disclosure.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^{\mu} \in \{0, \cdots, N_{slot}^{subframe,\mu} - 1\}$ in a

subframe and are numbered in an increasing order of $n_{s,f}^{\mu} \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ( $N_{symb}^{slot}$ ), the number of slots per radio frame ( $N_{slot}^{frame,\mu}$ ) and the number of slots per subframe ( $N_{slot}^{subframe,\mu}$ ) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on μ=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

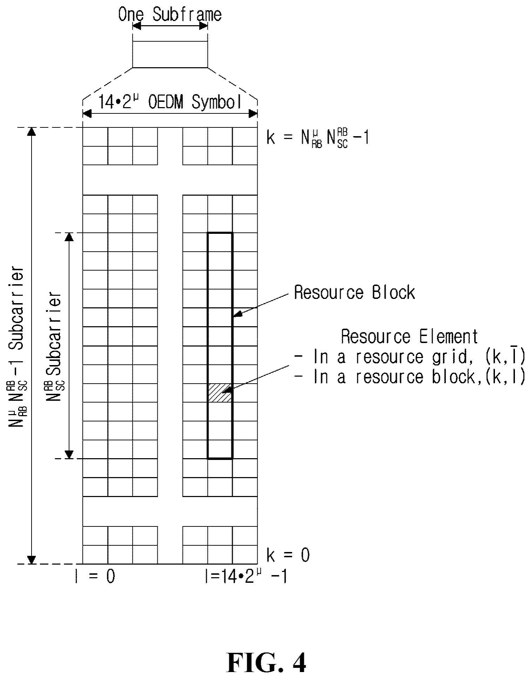

FIG. 4 exemplifies a resource grid in a wireless communication system applicable to the present disclosure.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{max,u}$ . The $N_{RB}^{max,\mu}$ represents a maximum transmission bandwidth, which may be different between an uplink and a downlink as well as between numerologies. In this case, one resource grid may be configured per μ and antenna port p. Each element of a resource

grid for μ and an antenna port p is referred to as a resource element and is uniquely identified by an index pair (k, l'). Here,

$$k=0, \ldots, N_{RB}^{\mu}N_{SC}^{RB}-1$$ is an index in a frequency domain and $$l'=0, \ldots, 2^{\mu}N_{symb}^{(\mu)}-1$$ refers to a position of a symbol in a subframe. When referring to a resource element in a slot, an index pair (k, l) is used. Here,

$$l=0, \ldots, 2^{\mu}N_{symb}^{(\mu)}-1$$. A resource element (k, l') for μ and an antenna port p corresponds to a complex value,

$$a_{k,f}^{(p,\mu)}$$. When there is no risk of confusion or when a specific antenna port or numerology is not specified, indexes p and μ may be dropped, whereupon a complex value may be $$a_{k,l'}^{(p)}$$ or $a_{k,l'}$. In addition, a resource block (RB) is defined as

$$N_{sc}^{RB} = 12$$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $$n_{CRB}^{\mu}$$ and a resource element (k, l) for a subcarrier spacing configuration μ in a frequency domain is given as in the following Equation 1.

$$[\text{Equation 1}]$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $$N_{BWP,i}^{size,\mu}-1$$ 1 in a bandwidth part (BWP) and i is the number of a BWP. A relationship between a physical resource block $n_{PRB}$ and a common resource block $n_{CRB}$ in BWP i is given by the following Equation 2.

$$[\text{Equation 2}]$$

$$n_{CRB}^{\mu} = n_{PRB}^{\mu} + N_{BWP,i}^{start,\mu}$$

$$N_{BWP,i}^{start,\mu}$$ is a common resource block that a BWP starts relatively to common resource block 0.

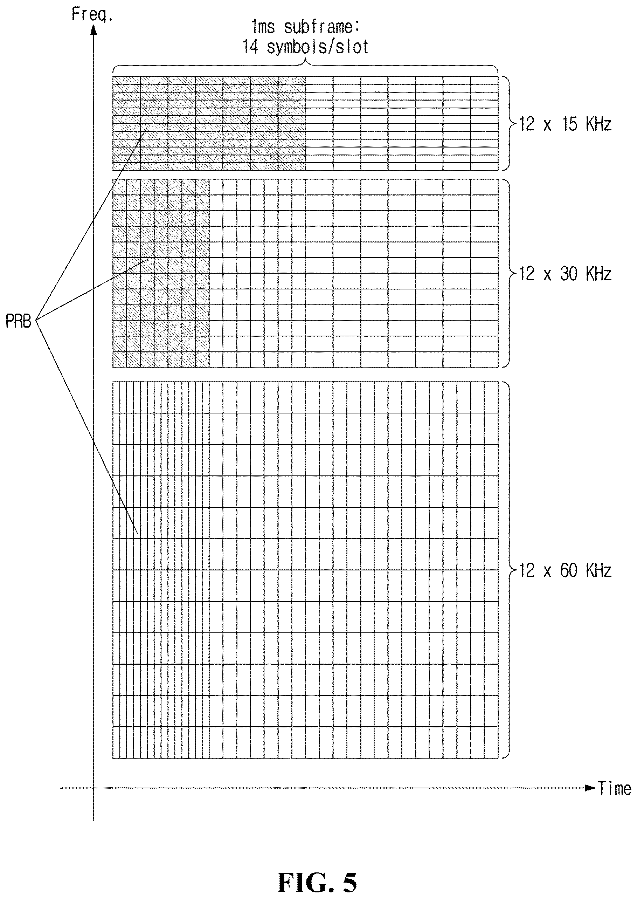

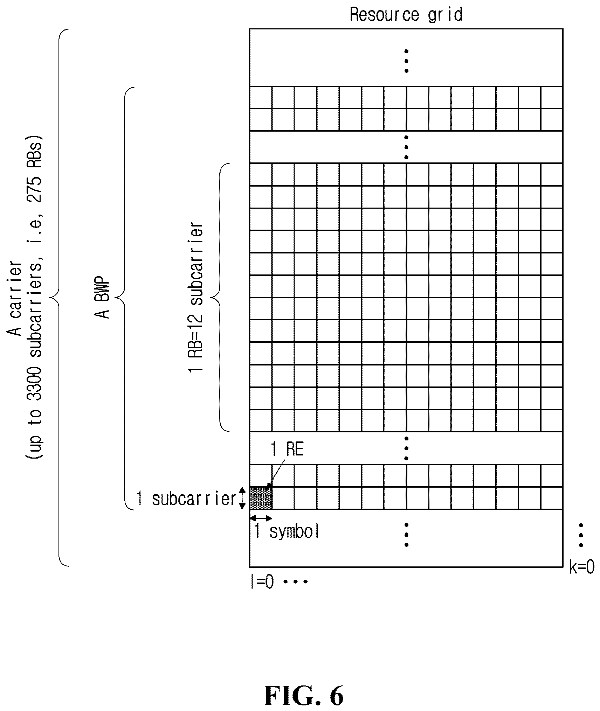

FIG. 5 exemplifies a physical resource block in a wireless communication system applicable to the present disclosure. In addition, FIG. 6 exemplifies a slot structure in a wireless communication system applicable to the present disclosure.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

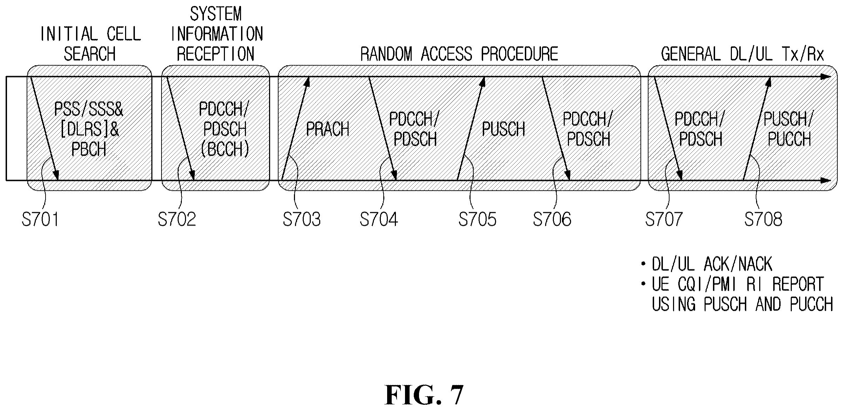

FIG. 7 illustrates examples of physical channels and an example of a general signal transmission and reception method using the physical channels used in a wireless communication system applicable to the present disclosure.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

## Specific Embodiments of the Present Disclosure

Hereinafter, the present disclosure relates to a random access procedure and to a technology for handling a case where a frequency resource exceeding a max scheduled transmission bandwidth is allocated to a terminal using a limited bandwidth. Particularly, the present disclosure provides various embodiments of determining a time duration for operation for a channel with a larger bandwidth than a max allowed bandwidth.

5G NR is a technology of providing a service based on three main technologies of Enhanced Mobile Broadband (eMBB), URLLC, and massive Internet of Thing (mIoT). mIoT may be considered a terminal device form with optimized power consumption based on a small size and low power rather than carrier aggregation (CA) that is technically directed to requiring a maximum throughput (max T-put) rate transmission with high performance. In 5G NR, apart from URLLC, eMBB and mIoT, there may be a hybrid type of those three technologies. In 3GPP Release-17, when a smart factory or a wearable device is a target, a new device type requiring low power and URLLC or a certain level of speed may be needed. This type of device is referred to as a reduced capability (Redcap) UE or a Redcap terminal.

As for frequency resource, unlike the existing device, a Redcap UE uses a narrow spectrum or bandwidth (BW). Specifically, a Redcap UE uses a maximum of 20 MHz or 5 MHz BW, instead of 100 MHz BW, and this case may reduce power consumption and save cost. That is, for a Redcap terminal using a 20 MHz BW of the 3GPP Release 17, in order to save some memory cost, it is possible to consider a technology for controlling use of a partial number of PRBs corresponding to a BWP size for a channel of PxSCH according to a situation and for applying relaxation to terminal processing time accordingly. The present disclosure proposes a technology that follows a modified decoding-related design by introducing an operation, which lowers partial performance, and thus has an advantage in effectively operating devices of a similar type to RedCap, apart from saving memory cost.

The present disclosure relates to a terminal using a narrow bandwidth, and for a BW of an overall channel, instead of the max 100 MHz BWP used by typical devices, the number of PRBs (e.g., the number of PRBs continuously or discontinuously placed within a max 20 MHz BWP) corresponding to a 5 MHz BW may be used as the number of PRBs of unicast PxSCH in a RedCap terminal using the max 20 MHz BWP. Herein, operation of a PDSCH within the number of PRBs corresponding to a max BWP size within a BWP has no big issue. However, in the case of a channel that delivering SIBI or PDCCH, a problem may occur.

For example, in case an ordinary smartphone, a Release-17 Redcap terminal, and a Release-18 eRedcap terminal exist in a single base station together, it may be desirable that the base station operates common channels without distinction and, only for operation of dedicated channels, provides a service to various types of terminals within coverage in a single cell by considering terminals according to each release. However, in the case of a 2-step random access channel (RACH) procedure, some terminals in a message B may be distinguished to a certain degree by a PRACH preamble ID that is not a RNTI level though. Accordingly, in the case of a Release-18 eRedcap terminal that requires further performance relaxation as compared to a Release-17 Redcap terminal, if the number of allocated PRBs exceeds a 5MHz BW, data processing may require more time with high probability, and accordingly it may be desirable that a more temporal margin is given until following channels. That is, in case, unlike a channel that is commonly operated, an allocation limit is given to the number of PRBs corresponding to the 5 MHz BW for a dedicated channel, a situation may occur in which the number of PRBs allocated to a message B for a 2-step RACH procedure exceeds the number of PRBs corresponding to the 5 MHz BW. In this case, general terminals may decode the message B without problem, but the Release-18 eRedcap terminal may have difficulty with decoding or require a high degree of complexity. Accordingly, instead of simplicity and cost reduction in model development, an efficient method for a Redcap or eRedcap terminal may be considered. Of course, the proposed technology of the present disclosure may be applied to other procedures likewise and be utilized as an improvement suitable for a situation. The present disclosure will mainly describe a message B that is transmitted through a frequency resource exceeding a max scheduled transmission BW (e.g., 5 MHz). Herein, PRBs of a 5 MHz BW may be placed contiguously or noncontiguously.

PRACH procedures are divided into two types. The one is Type 1 that corresponds to the existing 4-step PRACH, and the other is Type 2 that corresponds to the 2-step PRACH introduced by Release-16. The present disclosure proposes a technology of relaxing a PDSCH delivering a message B of Type 2 PRACH used in a special case, that is, 2-step PRACH during processing time of a terminal with a limit of 5 MHz BW for unicast. Specifically, the present disclosure proposes a technology of applying processing time relaxation for a case where the number of PRBs exceeding a 5 MHz BW is allocated.

A terminal considered in the present disclosure such as a RedCap or eRedCap terminal uses a limited BW. Accordingly, a channel with a BW exceeding the limited BW may not be processed within a single slot. However, even when the channel with the BW exceeding the limited BW is received, if a sufficient processing time is provided, a terminal may process the channel. Specifically, a limited BW, that is, a max scheduled transmission BW is a limit that may be processed within a single slot, and if a plurality of slots are provided as a processing time, a terminal may buffer data about a corresponding channel and then process the data during the given processing time. For example, in order to process a channel with a BW exceeding a limited BW, a time at least twice as long as a required time for processing a channel below the limited BW (e.g., at least two slots) may be required as a processing time.

Meanwhile, in the case of a PDSCH for SIB, unlike the PRACH procedure, the processing time relaxation may not be applied. It is because information included in the PDSCH for SIB is not user-specific information requiring quick decoding as compared with information related to a random access procedure. In the case of a Type 2 PRACH, information included in a message B may not be user-specific information. However, in case a specific terminal performs a Type 2 PRACH procedure for quick access, as the number of PRBs corresponding to the 5 MHz BW is not applicable as a limit like in unicast PxSCH, minimum relaxation needs to be applied to a processing time of the terminal in the PRACH procedure.

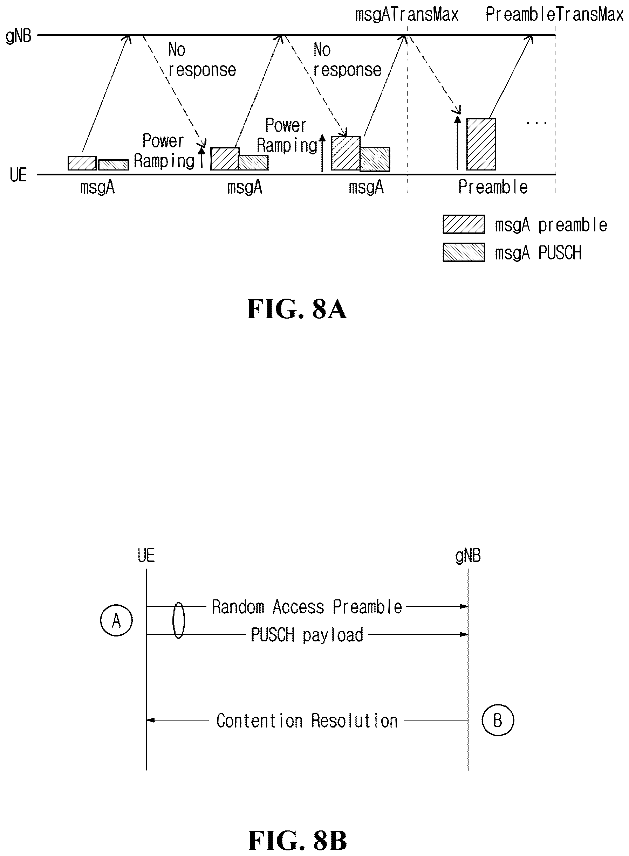

FIG. 8A and FIG. 8B illustrate an example of a procedure of 2-step PRACH that is applicable to the present disclosure. According to 2-step PRACH, a message 1 and a message 3 of 4-step PRACH are transmitted as message A at a short time interval, and a message 2 and a message 4 of 4-step PRACH are processed as message B simultaneously.

Hereinafter, Table 5 is a description extracted from the TS 38.213 document regarding a processing time of a terminal for transmitting ACK/NACK for a corresponding PDSCH after message B and how to apply K1 value in MAC PDU.

[Table 5]

| |
|---|
| If the UE detects the DCI format 1_0, with CRC scrambled by the corresponding MsgB-RNTI and LSE SFN field in the DCI format 1_0, if applicable, are same as corresponding LSBs of the SFN where the transmitted PRACH, and the UE receives a transport block in a corresponding PDSCH within the wind UE passes the transport block to higher layers. The higher layers indicate to the physical layer<br><br>    - an uplink grant if the RAR message(s) is for fallbackRAR and a random access preamble identity (RAPID) associated with the PRACH transmission is identified, and the UE procedure continues described in clauses 8.2, 8.3, and 8.4 when the UE detects a RAR UL grant, or<br>    - transmission of a PUCCH with HARQ-ACK information having ACK value if the RAR messag for success-RAR, where<br><br>        - a PUCCH resource for the transmission of the PUCCH is indicated by PUCCH resource indi field of 4 bits in the successRAR from a PUCCH resource set that is provided by *pucch-ResourceCommon*<br>        - a slot for the PUCCH transmission is indicated by a HARQ Feedback Timing Indicator field in the successRAR having a value k from {1, 2, 3, 4, 5, 6, 7, 8} and, with reference to slots PUCCH transmission having duration $T_{slot}$, the slot is determined as n + k + $\Delta$, where *n i* of the PDSCH reception and $\Delta$ is as defined for PUSCH transmission in Table 6.1.2.1.1-5 o 38.214]<br>            - the UE does not expect the first symbol of the PUCCH transmission to be after the last sy the PDSCH reception by a time smaller than $N_{T,1}$ + 0.5 msec where $N_{T,1}$ is the PDSCH processing time for UE processing capability 1 [6, TS 38.214]<br>        - for operation with shared spectrum channel access, a channel access type and CP extension [ 37.213] for a PUCCH transmission is indicated by a ChannelAccess-CPext field in the succe as defined in Table 7.3.1.1.1-4 in TS 38.212<br>        - the PUCCH transmission is with a same spatial domain transmission filter and in a same acti BWP as a last PUSCH transmission |

Table 5 shows a description about a terminal processing time until PUCCH ACK/NACK transmission of a corresponding PDSCH after MsgB-RNTI based DCI for message 2 is transmitted in a 2-step PRACH procedure. Specifically, it is certain that $N_{T,1}$ + 0.5 msec is needed, and a time of PUCCH transmission should be appropriately scheduled using a K1 value of a HARQ feedback timing indicator accordingly. Herein, the present disclosure applies an additional marginal time Y to propose that $N_{T,1}$ + 0.5 + Y msec is needed, and the additional marginal time Y may be applied only when the number of scheduled PRBs exceeds the number of PRBs corresponding to a max scheduled transmission BW (e.g., 5 MHz) of a PDSCH that is scheduled by a PDCCH using an MsgB-RNTI. In addition, if Y is applied, some improvements of operation may be needed. For example, in case a PUCCH is transmitted after the message B, the PUCCH should be transmitted after a time lapse containing Y, and the K1 value needs to be suitably indicated to correspond to n+K1+$\triangle$ s so that a terminal secures a sufficient time to transmit the PUCCH. Otherwise, a Release-18 eRedcap terminal may not complete decoding of the PDSCH for the message B at a time when the PUCCH should be transmitted, and normal PUCCH transmission may result in failure.

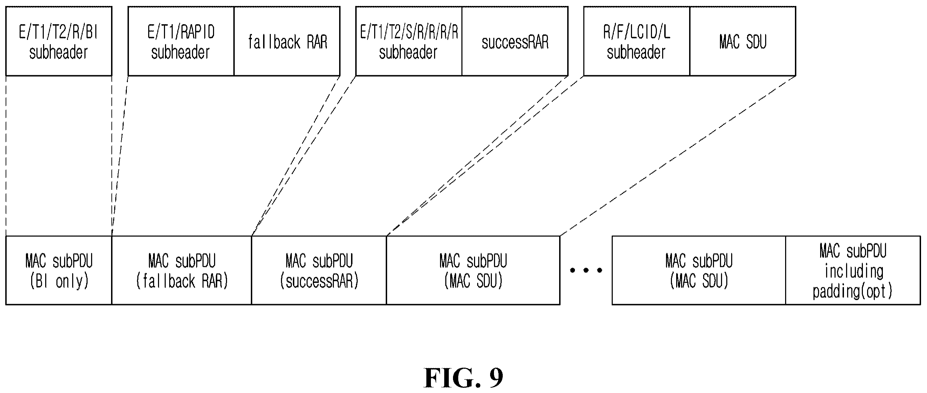

The K1 value may be delivered as follows. A PUCCH transmission time may not be indicated using the K1 value through a PDCCH but be indicated through a message B MAC PDU. This may be understood as a structure where partial information in relatively simplified DCI is transmitted through MAC CE instead of PDCCH. FIG. 9 illustrates an example of an MAC CE structure of a message B that is applicable to the present disclosure. Referring to FIG. 9, an overall MAC CE structure of a RAR is shown. Each PDU may include a fallback RAR (hereinafter 'fallbackRAR') or a success RAR (hereinafter 'successRAR') depending on a random access preamble ID (RAPID). MAC PDU information included in a fallback RAR is similar to uplink grant information of a RAR of 4-step PRACH.

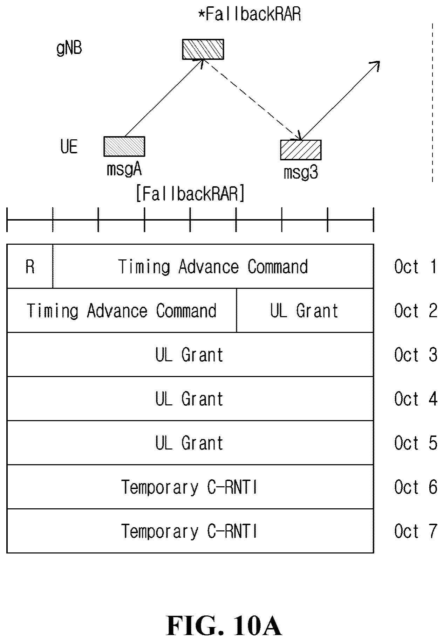

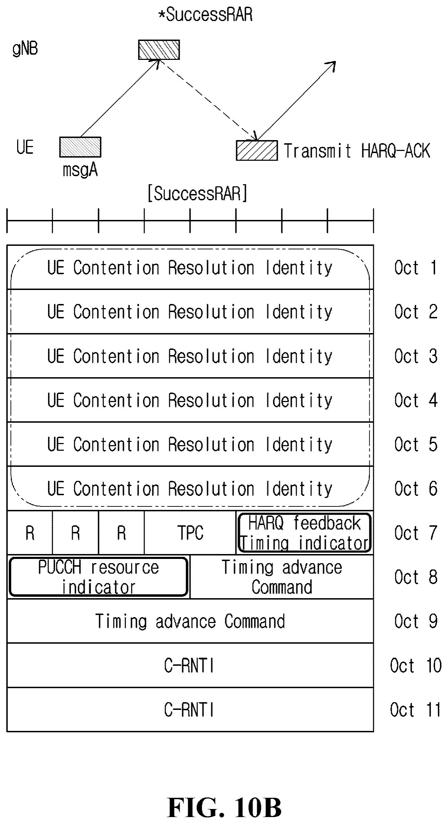

FIG. 10A and FIG. 10B illustrate examples of field structure of a RAR message that is applicable to the present disclosure. Referring to FIG. 10A and FIG. 10B, fields included in a RAR message are shown. Specifically, a fallbackRAR as shown in FIG. 10A includes a timing advance (TA) command, an uplink grant, and a TC-RNTI, and a successRAR as shown in FIG. 10B includes a UE contention resolution identity, a transmission power control (TPC) command, a HARQ feedback timing indicator, and a C-RNTI. In case a message B is scheduled using a MsgB-RNTI, the embodiments described below may be applied.

Embodiment #1: a scheme of terminal processing time relaxation based on a BWP size according to transmission of a message B

There may be various schemes regarding how many additional margins will be given after DCI transmission for the message B. In the case of a successRAR, an additional margin for PCCH transmission may be given through a Y value. In the case of a fallbackRAR, an additional margin for PUSCH transmission may be given through a X value. For example, Y is a single value, two cases are defined, that is, the one where the number of PRBs corresponding to 5 MHz, which is a max BW of 20 MHz, is greater than or equal to the number of scheduled PRBs, and the other where the number of scheduled PRBs is greater than the number of PRBs corresponding to 5 MHz, and Y may be selectively applied to the two cases. Alternatively, four cases may be defined according to the number of scheduled PRBs with a minimum unit being the number of PRBs corresponding to 5 MHz BW, and values of Y corresponding to the four cases may be defined in various ways. According to an embodiment, Y may be defined as shown in Equation 3 below. Here, X and Y may be identical with or different from each other.

$$Y = F \text{ (ceil (number of allocated PRBs) / (number of PRBs corresponding to 5 MHz BW)), SCS)} \qquad \text{[Equation 3]}$$

As shown in Equation 3, input variables of the function for Y may include two values of ceil {(number of allocated PRBs) / (number of PRBs corresponding to 5 MHz BW)} and SCS.

Furthermore, as for SCS, a time relationship in a multiple form may be considered between 15 KHz and 30 KHz. For example, it is possible to consider a relationship like (A1 for 15KHz SCS) = (A2 for 30KHz SCS) $\times$ 2. If SCS is not considered, A1 is 0 in Equation 3 above. In addition, according to a BW, it is possible to define the value of Y for a max scheduled transmission BW (e.g., 5 MHz) to be proportional to another value (e.g., P).

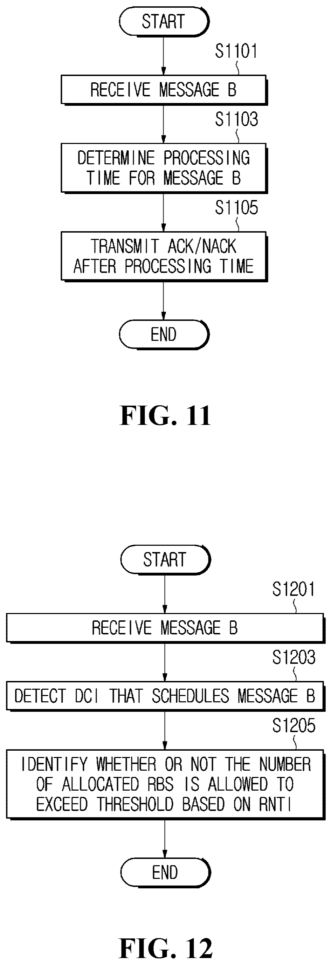

FIG. 11 illustrates an example of a procedure of transmitting feedback information on a message B based on an additional marginal time according to an embodiment of the present disclosure. FIG. 11 exemplifies a method performed by a terminal.

FIG. 11 illustrates an example of a procedure of transmitting feedback information on a message B based on an additional marginal time according to an embodiment of the present disclosure. FIG. 11 exemplifies a method performed by a terminal.

Referring to FIG. 11, at step S1101, the terminal receives the message B. To this end, the terminal may detect DCI for a PDSCH delivering the message B and receive the message B through the PDSCH indicated by the DCI. Herein, the DCI may be detected using an MsgB-RNTI. Next, the terminal may decode the message B and identify information in the message B. Herein, according to an embodiment, the terminal may identify at least a part of information for determining a processing time later from the DCI that schedules the message B. For example, the information for determining the processing time may include at least one of SCS of a corresponding BWP, the number of RBs allocated for the PDSCH, and the number of RBs corresponding to a max BW allowed for the terminal.

At step S1103, the terminal determines the processing time for the message B. For example, the processing time may be specified as a time spacing value that starts from a transmission time of a last OFDM symbol of the PDSCH of the message B. To this end, the terminal may determine the processing time based on the information identified at step S1101 and preconfigured information. For example, the terminal may determine an additional marginal time based on at least one of SCS of a BWP, the number of RBs allocated for the PDSCH, the number of RBs corresponding to a max BW allowed for the terminal, a marginal time determination function, and a marginal time mapping table, and determine the processing time based on the additional marginal time and a defalt marginal time. For example, the larger the number of allocated RBs, the additional marginal time may be determined to be longer.

At step S1105, the terminal transmits ACK/NACK after the processing time. That is, when the processing time determined at step S1103 has elapsed, the terminal transmits ACK/NACK to the base station. Herein, a transmission time of ACK/NACK may be indicated separately (e.g., through the message B). Accordingly, the terminal may process (e.g., decode, check error, etc.) the message B by using a time duration from the last symbol of the PDSCH delivering the message B to the transmission time of ACK/NACK as the processing time and transmit ACK/NACK.

As described with reference to FIG. 11, a terminal may determine a processing time for a message B based on an additional marginal time, process the message B during the determined processing time, and then transmit ACK/NACK. Hereinafter, the present disclosure will describe further detailed embodiments for determining an additional marginal time Y.

Embodiment #1-1: in case PRBs exceeding the number of PRBs corresponding to a max scheduled transmission BW(P) (e.g., 5 MHz) (hereinafter 'max PRB number') are allocated for a message B PDSCH, an additional margin is applied by Y. Otherwise, that is, in case PRBs not exceeding the max PRB number are allocated for the massage B, Y is 0.

Embodiment #1-2: the value of Y may be determined based on a relationship between the number of allocated PRBs and the number of PRBs corresponding to a max scheduled transmission BW(P) (e.g., 5 MHz). For example, if the number of PRBs corresponding to a BW(P) of 5 MHz is 25 with 15 KHz SCS, a section of a plurality of allocated PRBs (e.g., 25, 50, 75, 100, etc.) may be defined in a unit of 25, and a plurality of Y values may be defined to correspond to sections. For example, a set of selectable Y values may consist of four values including 0. In addition, the value of Y may be determined in a multiple form of a specific value of K and be determined differently, for example, every 25 PRBs (e.g., Y = Floor {(number of PRBs allocated for message 2) / 25}×K)

Embodiment #1-3: in the above-described Embodiment #1-2, SCS may further be considered. In case the value of Y is determined based on SCS, a value of Y corresponding to 15 KHz and a value of Y corresponding to 30 KHz may have a 2 or 1/2 times relationship. Alternatively, the value of Y corresponding to 15 KHz and the value of Y corresponding to 30 KHz may be defined as two different values, not the 2 or 1/2 times relationship. For example, a delay value corresponding to the number of allocated PRBs and a delay value derived from SCS may be in a product relationship (e.g., Y = (delay value corresponding to number of allocated PRBs) x (delay value of SCS)). As another example, the delay value corresponding to the number of allocated PRBs and the delay value derived from SCS may be in an addition relationship (e.g., Y = (delay value corresponding to number of allocated PRBs) x (delay value of SCS)).

Embodiment #1-4: in case a FallbackRAR, instead of a SuccessRAR, is transmitted in response to a corresponding RAPIN in a message B, an additional marginal time applied in a 4-step PRACH may be reused.

Embodiment #1-5: in case a FallbackRAR, instead of a SuccessRAR, is transmitted in response to a corresponding RAPIN in a message B, a different Y value may be defined from when the SuccessRAR is transmitted.

Embodiment #1-6: in case a RNTI used for a message B is not an MsgB-RNTI but a C-RNTI, the above-described additional marginal time Y is not applied. That is, in case DCI, which schedules the message B, is encoded using the MsgB-RNTI (e.g., a CRC bit string of the DCI is scrambled using the MsgB-RNTI), RBs allocated for the message B may be equal to or greater than the number of RBs corresponding to a max scheduled transmission BW of a terminal or may not exceed the number. On the other hand, in case the DCI, which schedules the message B, is encoded using the C-RNTI (e.g., the CRC bit string of the DCI is scrambled using the C-RNTI), the RBs allocated for the message B does not exceed the number of RBs corresponding to the max scheduled transmission BW of the terminal. Accordingly, the terminal may determine a BW of a channel scheduled by the DCI by using a RNTI applied to the DCI and determine whether or not to apply the above-described embodiments. An operation of such a terminal may be described in detailed as in FIG. 12 below.

FIG. 12 illustrates an example of a procedure of identifying a bandwidth of a channel by using a RNTI according to an embodiment of the present disclosure. FIG. 12 exemplifies a method performed by a terminal.

Referring to FIG. 12, at step S1201, the terminal transmits a message A. The terminal may transmit a random access preamble and a PUSCH. To this end, the terminal selects at least one a RACH occasion (RO) in a RACH, selects an index of the random access preamble, and then transmits the random access preamble with the selected index on the selected RO. In addition, the terminal transmits the message A on at least one PUSCH occasion (PO).

At step S1203, the terminal detects DCI that schedules a message B. To this end, the terminal may use an MsgB-RNTI or a C-RNTI. That is, the terminal attempts to detect decoded DCI by using the MsgB-RNTI or the C-RNTI.

At step S1205, the terminal identifies, based on a RNTI associated with the DCI, whether or not the number of allocated RBs is allowed to exceed a threshold. In other words, the terminal checks whether or not the number of RBs allocated for the message B is possible to exceed the threshold. That is, the terminal checks whether or not the number of RBs allocated for a downlink channel delivering the message B is allowed to exceed the threshold. Herein, if the DCI is detected using the MsgB-RNTI (e.g., DCI incudes CRC scrambled by the MsgB-RNTI), the terminal determines that the number of allocated RBs may exceed the threshold. In this case, the terminal may perceive that there is possibility of applying an additional marginal time for determining a processing time. On the other hand, if the DCI is detected using the C-RNTI, the terminal determines that the number of allocated RBs will not exceed the threshold.

As described with reference to FIG. 12, by using a RNTI used for decoding DCI, a terminal may perform at least one operation for a case where the number of PRBs allocated by the DCI is greater than a threshold. For example, the at least one operation for a case where the number of PRBs allocated by the DCI is greater than a threshold may include an operation of determining a processing time based on SCS. However, the at least one operation for a case where the number of PRBs allocated by the DCI is greater than a threshold may be performed when at least another condition is satisfied. For example, the at least another condition may be defined based on at lest one of a cause of RACH failure and a type of an included RAR.

Embodiment #2: a timing control scheme for transmission of a PUCCH in terminal processing time relaxation

In Embodiment #1, when a sufficiently additional marginal time Y is added to a terminal processing time, a suitable K1 value for timing of transmitting a PUCCH should be indicated through a message B in order for the terminal to have a smooth PUCCH transmission operation. In other words, a base station may need to suitably notify the K1 value.

According to an embodiment, a slot offset may be applied to the K1 value. Herein, a value of the offset may be different depending on SCS.

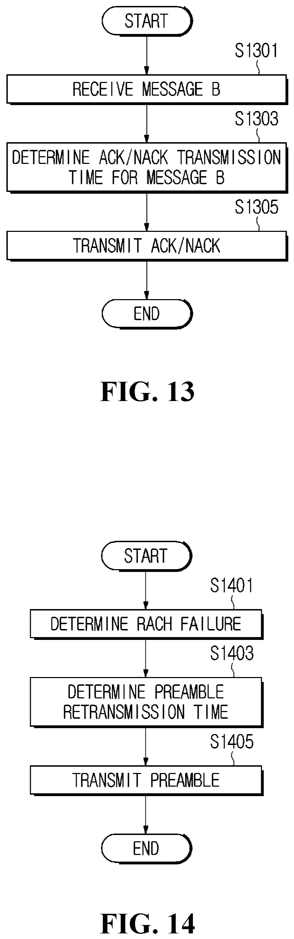

FIG. 13 illustrates an example of a procedure of transmitting feedback information on a message B based on a feedback time indicator according to an embodiment of the present disclosure. FIG. 13 exemplifies a method performed by a terminal.

Referring to FIG. 13, at step S1301, the terminal receives a message B. To this end, the terminal may detect DCI for a PDSCH delivering the message B and receive the message B through the PDSCH indicated by the DCI. Herein, the DCI may be detected using an MsgB-RNTI. In addition, the terminal may decode the message B and identify information in the message B. Herein, the terminal may identify at least a portion of information for determining a transmission time of ACK/NACK later from the scheduling DCI in the message B. For example, the information for determining the transmission time of ACK/NACK may include at least one of a HARQ feedback time indicator, a slot where the PDSCH delivering the message B is received, and SCS.

At step S1303, the terminal determines the transmission time of ACK/NACK for the message B. For example, the transmission time of ACK/NACK may be specified as a time spacing value that starts from a transmission time of a last OFDM symbol of the PDSCH of the message B. To this end, the terminal may determine the transmission time of ACK/NACK based on the information identified at step S1301 and preconfigured information. For example, the terminal may determine an additional marginal time based on at least one of SCS of a BWP, the number of RBs allocated for the PDSCH, the number of RBs corresponding to a max BW allowed for the terminal, a marginal time determination function, and a marginal time mapping table, and determine the transmission time of ACK/NACK based on the additional marginal time and a defalt marginal time.

At step S1305, the terminal transmits ACK/NACK. The terminal transmits ACK/NACK to a base station according to the transmission time of ACK/NACK that is determined at step S1303. For example, the terminal may determine a slot for ACK/NACK transmission based on at least one of the HARQ feedback time indicator, the slot where the PDSCH delivering the message B is received, and the SCS and transmit ACK/NACK by using a PUCCH in the slot. That is, the terminal may process (e.g., decode, check error, etc.) the message B before the ACK/NACK transmission time arrives and transmit ACK/NACK.

As described with reference to FIG. 13, a terminal may determine an ACK/NACK transmission time for a message B based on a time indicator indicated through the message B and transmit ACK/NACK. Hereinafter, the present disclosure will describe further detailed embodiments for determining an additional time indicator K.

Embodiment #2-1: an offset value for K1 may be predefined. An offset may be defined as a single value or a plurality of values. Herein, as various Y values may be defined in Embodiment #1, various offset values may be likewise defined according to the number of scheduled (P)RBs or SCS. Alternatively, similar to Embodiment #1-2, an offset may be defined as a plurality of values including 1.

Embodiment #2-2: an offset value for K1 may be signaled through SIB1. An offset may be defined as a single value or a plurality of values. Herein, as various Y values may be defined in Embodiment #1, various offset values may be likewise signaled according to the number of scheduled (P)RBs or SCS.

Embodiment #2-3: an offset value may be indicated through a DCI field of a PDCCH that is scheduled by an MsgB-RNTI. An example of DCI including the offset value may be as shown in Table 6 below.

[Table 6]

| Field | Bits | Comment |
|---|---|---|
| Frequency domain resource assignment | $\lceil \log_2(N_{RB}^{DL,BWP}(N_{RB}^{DL,BWP}+1)/2) \rceil$ | |
| Time domain resource assignment | 4 | Subclause 5.1.2.1 of [6, TS 38.214] |
| VRB-to-PRB mapping | 1 | Table 7.3.1.2.2-5 [7, TS 38.212] |
| Modulation and coding scheme | 5 | Use MCS table without 256QAM |
| TB scaling | 2 | Subclause 5.1.3.2 of [6, TS 38.214] |
| LSBs of SFN | 2 | |
| PUCCH Offset | X bits | PUCCH offset |
| Reserved | 14-X | Reserved |

Embodiment #2-4: instead of the PUCCH offset field of Table 6, a field indicating an HARQ feedback indicator value (e.g., K1 reflecting an offset) considering delay first may be included. That is, a general terminal may use a value included in a SuccessRAR for a PUCCH K1, and a Release-18 eRedcap terminal may identify a HARQ feedback indicator value considering delay by using a field defined in DCI.

Embodiment #2-5: a range of K is defined as shown in Table 7. A K range for a Release-18 eRedcap terminal may be separately defined. For example, as a set of candidate values of K, {A, B, C, D, E, F, G, H} may be defined. In this case, a value of K may be indicated by using an index that is not the value of K. Values mapped to each index may be RRC signaled or predefined.

Table 71

- a slot for the PUCCH transmission is indicated by a HARQ Feedback Timing Indicator field of 3 bits in the successRAR having a value *k* from {1, 2, 3, 4, 5, 6, 7, 8} and, with reference to slots for PUCCH transmission having duration $T_{slot}$, the slot is determined as n + *k* + $\Delta$, where n is a slot of the PDSCH reception, $\Delta$ is as defined for PUSCH transmission in Table 6.1.2.1.1-5 of [6, TS 38.214]

Without RRC signaling for a range of K, a predefined value or {1,2,3,4,5,6,7,8} for a general terminal may be used. Alternatively, instead of a new set of candidate values, only a value equal to or greater than a specific value in an existing set may be set to use through predefinition or RRC signaling.

Embodiment #2-6: instead of an offset, an SLIV value may be indicated through DCI of an MsgB-RNTI. If the number of PRBs allocated for a message B is smaller than the number of PRBs corresponding to a 5 MHz BW, the offset may not be applied.

Embodiment #2-7: in case a FallbackRAR is transmitted instead of a SuccessRAR, another time domain resource allocations (TDRA) table, which is obtained by updating a default TDRA table used in a 4-step PRACH, may be applied, or any one of embodiments of applying another offset value may be applied.

Embodiment #2-8: in case a FallbackRAR is transmitted instead of a SuccessRAR, a new default TDRA table, which is not applied in a 4-step PRACH, may be applied, or any one of embodiments of applying an offset value may be applied.

Embodiment #2-9: a PUCCH may be transmitted in a slot that is determined by n+k+$\triangle$, and Table 8 below, which defines $\triangle$, may be updated. Some of the above-described embodiments may be understood to propose update of a table related to an offset for K, and this embodiment may be understood to propose update of an SCS-related table. Specifically, as the left column of Table 8 below shows values indicating SCS, an offset may be determined based on $\triangle$ according to SCS. Alternatively, another table may be newly defined.

[Table 8]

| $\mu_{PUSCH}$ | $\Delta$ |
|---|---|
| 0 | 2 |
| 1 | 3 |
| 2 | 4 |
| 3 | 6 |

Embodiment #2-10: in case a PDSCH delivering a message B is scheduled by a PDCCH using a C-RNTI, an offset or a new table definition, update of an existing table and the like according to the embodiments belonging to the above-described Embodiment #2 may not be applied.

Embodiment #2-11: among 8 values for a predefined K1, only some of the values, which are equal to or greater than a threshold, may be used. Herein, those some values may be predefined or be set by RRC signaling or SIB.

- Embodiment #2-12: an index of each offset value may be set using SIB1, and the index may be indicated using a remaining bit(s) of an FDRA field of uplink grant or a CSI request field. Alternatively, a field indicating the index may be included in DCI of a RA-RNTI. In this case, a slot offset value corresponding to a corresponding bit (e.g., index) may be different according to SCS.

Embodiment #3: a timing control scheme for retransmission of a message A after a PRACH procedure is determined as failure at message B step.

As described above, the present disclosure explained embodiments for improving PUCCH transmission according to reception of a message B. Embodiment #3 relates not to transmission of PUCCH but to a case of PRACH failure occurring in a message B, and a message A is retransmitted in this case. Herein, relaxation of a terminal processing time according to the above-described embodiments may be applied. Table 9 below is a description about retransmission of a message A, which is extracted from the TS 38.213 document.

[Table 9]

The UE does not expect to be indicated to transmit the PUCCH with the HARQ-ACK information at a time that is prior to a time when the UE applies a TA command that is provided by the transport block. If the UE does not detect the DCI format 1_0 with CRC scrambled by the corresponding MsgB-RNTI within the window, or if the UE detects the DCI format 1_0 with CRC scrambled by the corresponding MsgB-RNTI within the window and LSBs of a SFN field in the DCI format 1_0, if applicable, are not same as corresponding LSBs of the SFN where the UE transmitted the PRACH, or if the UE does not correctly receive the transport block in the corresponding PDSCH within the window, or if the higher layers do not identify the RAPID associated with the PRACH transmission from the UE, the higher layers can indicate to the physical layer to transmit only PRACH according to Type-1 random access procedure or to transmit both PRACH and PUSCH according to Type-2 random access procedure [11, TS 38.321]. If requested by higher layers, the UE is expected to transmit a PRACH no later than $N_{T,1}$ + 0.75 msec after the last symbol of the window, or the last symbol of the PDSCH reception, where $N_{T,1}$ is a time duration of $N_1$ symbols corresponding to a PDSCH processing time for UE processing capability 1 when additional PDSCH DM-RS is configured. For $\mu = 0$, the UE assumes $N_{1,0}$ = 14 [6, TS 38.214].

Unless the UE is configured a SCS, the UE receives subsequent PDSCH using same SCS as for the PDSCH reception providing the RAR message.

Here, according to various embodiments, a Z value may further added to $N_{T,1}$ + 0.75 msec. Here, because Z is applied to a different situation from Y defined in the above embodiments, X, Z and Y may be treated as different values from each other, or Y may be equal to Z. Z is not always applied in the situation described by Table 9 but may be applied, according to an embodiment, to a case where a response of a message B is not received while more (P)RBs than the number of (P)RBs corresponding to a 5 MHz BW are scheduled in a PDSCH of the message B. For example, this corresponds to a case where information on a PDSCH through a RA-RNTI has no information on a corresponding terminal or to a situation where CRC check failure occurs. Detailed embodiments for determining Y in Embodiment #1 may be performed in the same way or in a similar way in order to determine Z. That is, Z values may be defined for two situations where an equal or smaller number of PRBs are allocated as compared with the number of PRBs corresponding to a max scheduled transmission BW (e.g., 5 MHz) (hereinafter 'max PRB number') and PRBs exceeding the max PRB number are allocated, respectively. Alternatively, values of SCS or BW may be divided into 3 or more sections, and 3 or more Z values may be defined for the sections.

FIG. 14 illustrates an example of a procedure of retransmitting a signal including a preamble according to an embodiment of the present disclosure. FIG. 14 exemplifies a method performed by a terminal.

Referring to FIG. 14, at step S1401, the terminal determines RACH failure. For example, after the terminal transmits a message A, if the terminal fails to detect DCI for a PDSCH delivering a message B within a corresponding window, if the terminal detects the DCI but fails in CRC check, if the terminal fails to receive a corresponding TB properly, or if the message B is received without including a RAPID of the terminal, the terminal determines RACH failure. Accordingly, the terminal may determine transmission of a message 1 or a message A including a preamble.

At step S1403, the terminal determines a retransmission time of the preamble. In case the terminal fails to receive the message B, the terminal identifies information for determining a retransmission time of a message including the preamble. Herein, the terminal may determine the retransmission time based on an additional marginal time that is determined based on a max scheduled transmission BW for the terminal. For example, the additional marginal time may be determined based on at least one of the number of RBs allocated for the message B, a type of RACH failure, and SCS.

At step S1405, the terminal transmits the preamble. That is, the terminal may transmit the message 1 or the message A including the preamble after the time that is determined at step S1403.

As described with reference to FIG. 14, a terminal may determine a retransmission time of a preamble based on an additional marginal time and transmit the preamble. Hereinafter, the present disclosure will describe further detailed embodiments for determining an additional marginal time Z.

Embodiment #3-1: in case PRBs exceeding the number of PRBs corresponding to a max scheduled transmission BW (e.g., 5 MHz) (hereinafter 'max PRB number') are allocated for a message 2 PDSCH, an additional marginal time Z may be applied. Otherwise, that is, in case PRBs not exceeding the max PRB number are allocated for the message B, Z is equal to 0.

Embodiment #3-2: a value of Z may be determined based on a relationship between the number of allocated PRBs and the number of PRBs corresponding to a max scheduled transmission BW(P) (e.g., 5 MHz). For example, if the number of PRBs corresponding to a BW(P) of 5 MHz is 25 with 15 KHz SCS, a section of a plurality of allocated PRBs (e.g., 25, 50, 75, 100, etc.) may be defined in a unit of 25, and a plurality of Z values may be defined to correspond to sections. For example, a set of selectable Z values may consist of four values including 0. That is, the value of Z may be determined in a similar way to Embodiment #1-2.

Embodiment #3-3: in case a PDDCH scheduling the message B is not an MsgB-RNTI but a C-RNTI, no additional marginal time Z is applied. That is, Z is 0. In addition, by using an additional marginal time Z, in a message B, if a terminal is allocated more PRBs than the number of PRBs corresponding to a max scheduled transmission BW but its RAPID is not identified, the terminal transmits a message A. Herein, a value of Z may be the same as or different from a Z value that is applied when a message 1 is retransmitted since there is no RAPID in a 4-step PRACH.

- Embodiment #3-4: in case a terminal applies a specific Z value, the Z value may be selectively applied between a case where a preamble ID transmitted by the terminal is not identified in a RAPID field and a case where PDSCH decoding fails, but may not be applied to both cases. For example, the Z value may be applied only to the case where the preamble ID of the terminal is not present in the RAPID field, but the Z value may not be applied to the case where the PDSCH is not correctly decoded. As another example, different Z values may be applied for the two cases. Herein, in case the RAPID field does not include the preamble ID of the terminal, a same Z value as applied to a message 2 may be applied. In other words, Z values for the two cases may be different from each other.

Embodiment #4: various other proposals

Embodiments for determining a value of Y or Z may also be applied to a case where the number of scheduled PRBs is greater than the number of PRBs corresponding to a BW of a specific frequency band. If the number of PRBs in the specific frequency band is N and the number of scheduled (P)RBs is greater than N, whether or not Z or Y is applied to PUCCH transmission or message A transmission in a PRACH procedure may depend on the number of PRBs allocated for a message B. In addition, Z or Y may have at least one value excluding 0 and may have a plurality of values. Herein, in case Z or Y has a plurality of values, a plurality of different values may be designated to SCS and/or different ranges as many as allocated PRBs. In addition, according to BW or SCS, a K1 value may be suitably signaled, or an offset may be applied. Herein, when a plurality of Y values are designated, a plurality of offsets may also be determined or a single offset value corresponding to a longest delay may be defined.

$Z = F$ (Floor ((number of allocated PRBs) / (number of PRBs corresponding to specific MHz BW)), SCS) $Y = F$ (Floor ((number of allocated PRBs) / (number of PRBs corresponding to specific MHz BW)), SCS)       [Equation 4]

Here, SCS is 15 KHz or 30 KHz.

- Embodiment #4-1: SCS may not be used as an input for a function that determines Z or Y. In case a value is determined based on whether or not the number of allocated PRBs is equal to or smaller than the number of PRBs corresponding to a specific BW, Y and Z may have one value except 0.

Embodiment #1 to Embodiment #3 consider an eRedcap terminal that uses a 5 MHz BW for unicast. For diversity of Release-18, it is also possible to consider the emergence of a terminal that is capable of full scheduling of a unicast channel for a 20 MHz BW, has a peak data rate of PRB and 10 Mbps corresponding to 5 MHz BW, has an overall function similar to the RedCap terminal of Release-17, but is designed to have a max T-put of 10 Mbps, not 50 Mbps. In this case, the following schemes may be applied to embodiments about Y value or offset and update of tables such as various embodiments belonging to Embodiment #1 to Embodiment #3.

- Embodiment #4-2: for a 3GPP release-18 eRedCap terminal that is capable of unicast scheduling of 20 MHz BW and has a peak data rate of 10 Mbps, a 2-step PRACH procedure with the above-described embodiments being applied thereto may be operated.
- Embodiment #4-3: for a 3GPP release-18 eRedCap terminal that is capable of unicast scheduling of 20 MHz BW and has a peak data rate of 10 Mbps, the above-described embodiments may not be applied, and a 2-step RACH procedure may be applied in the same way as the RedCap terminal of Release-17.

The above-described embodiments may be applied only to an operation in a specific initial BWP.

- Embodiment #4-4: Settings about Y value, table update, offset and the like may be predefined in relation to a specific initial BWP or be indicated by signaling through RRC SIB.

Additionally, in the above-described embodiments, in case a PUCCH for a SuccessRAR is transmitted or a PUSCH for a FallbackRAR is transmitted after a Y value is applied, an upper layer may not sufficiently consider a transmission time of PUCCH but transmit a message 3 or PUCCH before decoding of a message B is completed. In this case, RACH failure is determined, and a message 1 or a message A may be immediately retransmitted accordingly.

- Embodiment #4-5: as for a processing time Y (e.g., 0 or another value) of a message B, before a PUCCH transmission time, in case processing of a message B is not completed due to lack of decoding time, RACH failure is determined, and a message A or a message 1 is retransmitted. In this case, Embodiment #3 may be applied.

If a message B is scheduled using not an MsgB-RNTI but a C-RNTI, the above-described embodiments may not be applied.

- Embodiment #4-6: in case a message B is scheduled using a C-RNTI, new definition or update of an offset or table and relaxation of Y value, which were applied to the above-described embodiment, may not be applied.

The present disclosure mainly describes a specific processing time for a case where the number of PRBs allocated to a PDSCH for a message B exceeds the number of PRBs corresponding to a 5 MHz BW. However, in the case of 2-step RACH, unlike 4-step RACH, preamble and PUSCH transmission are performed together through a message A. In eRedCap, for terminal transmission, like a PDSCH, a PUSCH should allocate PRBs within the 5 MHz BW. However, because the number of PRBs of the PUSCH is indicated through broadcasting of a base station using an SIB, if a terminal, which transmits the message A, is an eRedCap terminal of Release-18 incapable of processing the PUSCH beyond the number of PRBs corresponding to the 5 MHz BW, a problem may occur. Accordingly, in this case, a 2-step RACH cannot be used, and a 4-step RACH alone should be used.

- Embodiment #4-7: in case the number of PRBs allocated for a message A PUSCH in 2-step RACH is signaled by an SIB to be equal to or greater than the number of PRBs corresponding to the 5 MHz BW, a 2-step RACH is not used, but a 4-step RACH is used. That is, the SIB includes information related to the message A PUSCH, for example, information related to a frequency resource size of the message A PUSCH. Accordingly, through the SIB, the terminal may determine whether or not the number of PRBs allocated for the message A PUSCH is equal to or greater than the number of PRBs corresponding to the 5 MHz BW and based on a determination result, may determine whether or not a corresponding RA resource is available for performing a 2-step RACH.

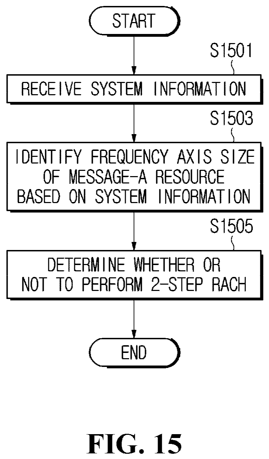

FIG. 15 illustrates an example of a procedure of determining whether or not to use a random access resource according to an embodiment of the present disclosure. FIG. 15 exemplifies a method performed by a terminal.
Referring to FIG. 15, at step S1501, the terminal receives system information. For example, the terminal may obtain synchronization with a base station by detecting a synchronization signal, obtain a master information block (MIB) through a broadcast channel, and receive at least one SIB.
At step S1503, the terminal identifies a frequency resource size of a message A resource through the system information. The SIB includes information related to a PUSCH for a message A. Accordingly, the terminal, which receives the system information, may obtain the information related to the PUSCH for the message A. Thus, the terminal may identify the number of RBs allocated as the message A resource.
At step S1505, the terminal determines whether or not to perform a 2-step RACH. The terminal has a limit of a max scheduled transmission BW. Accordingly, if the number of RBs allocated as the message A resource is greater than the number of RBs corresponding to the max scheduled transmission BW, the terminal is incapable of performing PUSCH transmission within the message A resource. Accordingly, if the number of RBs allocated as the message A resource is greater than the number of RBs corresponding to the max scheduled transmission BW, the terminal does not use a corresponding RA resource.
As described with reference to FIG. 15, by using a RNTI that is used to decode DCI, a terminal may determine whether or not a situation may occur where a BW of a channel scheduled by the DCI exceeds a BW that the terminal is capable of receiving or processing in one slot. Furthermore, although not illustrated in FIG. 15, the terminal may perform a 4-step PRACH procedure. That is, the terminal may fall back to a 4-step PRACH. In other words, the terminal may determine that a corresponding RA resource is not available for performing a 2-step RACH procedure and may not use the RA resource.

- Embodiment #4-8: as for two features of Release-18 RedCap, a terminal, which is capable of processing PRBs corresponding to a 20 MHz BW in unicast, may use a 2-step RACH.

- Embodiment #4-9: a parameter for notifying the number of PRBs for a PUSCH of a 2-step RACH may be added to an eRedCap terminal. Because an existing parameter enables a setting exceeding a 5 MHz BW, a new parameter, which enables a setting only within PRBs corresponding to the 5 MHz BW, may be added to RRC instead. Accordingly, in case the parameter is not set, the terminal may use a 4-step RACH. In this case, regarding which resource is to be used among RACH resources, the following schemes may be applied.

In case a 2-step RACH is configured for an uplink resource, a resource of a corresponding resource configured in relation to Release-17/18 (e)redCap of a 4-step RACH resource may be shared in the same uplink resource. On the other hand, in case the 2-step RACH is not configured for the uplink resource, a RACH resource not including an early indication RACH resource may be shared in the same uplink resource.

If, in eRedCap, a separate initial uplink BWP for eRedCap is configured, the uplink BWP is used. However, in case the number of PRBs allocated to a message A PUSCH of a 2-step RACH of the BWP is equal to or greater than the number of PRBs corresponding to a 5 MHz BW, if a message A PUSCH of a 2-step RACH of an existing legacy uplink BWP is within 5 MHz BW PRBs, the message A PUSCH may be used. However, if the PUSCH of the message A is also greater than the number of PRBs corresponding to the 5 MHz BW, a 4-step RACH in the separate initial uplink BWP may be used.

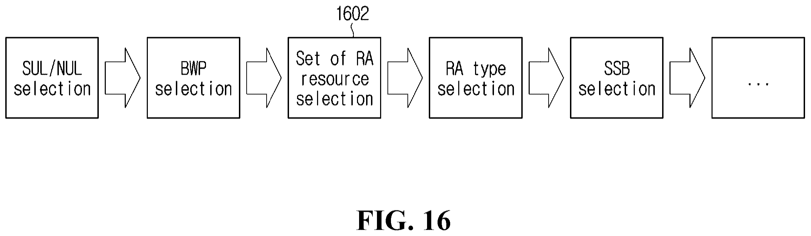

- Embodiment #4-10: in case an initial indicator of a 2-step RACH is not configured in a preamble and a CRC error occurs to a PUSCH, a fallbackRAR may be scheduled in a message B PDSCH. Herein, in case an FDRA of the RAR schedules RBs equal to or greater than a 5 MHz BW, RACH failure is determined, and a message A or a message 1 may be retransmitted. This embodiment may be applied only to a case of being scheduled by an MsgB-RNTI.
- Embodiment #4-11: in Rel-18 eRedCap, there may be a case where an early indicator of a 2-step RACH does not exist and an early indicator of a 4-step RACH exists. In this case, as for which resource a corresponding terminal uses, there may be a method by which a resource of a RACH is selected by the terminal. It is because, as shown in FIG. 16, the resource of the RACH is configured for an early indicator and in this case, if an early indicator is configured for a 4-step RACH but no early indicator is configured for a 2-step RACH, the procedure may not be performed in an operation of set selection for RACH resource (1602). Accordingly, only in this case, the following operation may be performed when an early indicator of Release-17 RedCap is allocated and when no early indicator is allocated.

In case a RACH RO or RACH partitioning for an early indicator of Release-17 is configured, a terminal may utilize a corresponding resource for a 2-step RACH. Alternatively, in case the RACH RO or RACH partitioning for the early indicator of Release-17 is not configured, the terminal may utilize a 2-step RACH resource of a legacy resource.

In Release-18, eRedCap classifies two types of terminals: the one includes terminals having a feature that the number of PRBs corresponding to a 20 MHz BW can be processed in a unicast PDSCH, and the other includes terminals having a feature that only the number of PRBs corresponding to a 5 MHz BW can be processed for the above-described unicast PDSCH. The present disclosure has mainly addressed the feature related to the latter, but the embodiments of the present disclosure may also be applied to the former in some cases.

In preparation for a general device of a device that should support up to 100 MHz in 5G, a Redcap device of Release-17 has a maximum bandwidth of 20 MHz. The Redcap device has been introduced as a technology that is simple in components or operation and is capable of saving much cost. The present disclosure proposes a technology that does not cause significant modification and is capable of saving additional cost with respect to buffer size or memory. Specifically, in order to achieve low cost in PRACH processing, the present disclosure proposes a technology regarding whether or not a terminal with a structure of PxSCH capable of small data processing is operated in a Type 2 PRACH (e.g,, a 2-step PRACH). Through the proposed technology of the present disclosure, as a certain degree of relaxation is given to a process of a terminal, an advantageous effect on power consumption may occur, and the amount of buffer for data processing may be designed to be small, so that a good feature of memory utilization will occur. Accordingly, a terminal according to the present disclosure may maintain a processing capability of PxSCH of unicast, process data with a BW exceeding the number of PRBs corresponding to a 5 MHz BW even by small performance, and furthermore enable a small-size design advantageous in power consumption and cost to be expected.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method performed by a terminal in a wireless communication system, the method comprising:

   transmitting a message A for a random access procedure;
   receiving downlink control information (DCI) that schedules a message B;
   receiving a physical downlink shared channel (PDSCH) scheduled by the DCI through physical resource blocks (PRBs) allocated by the DCI; and
   in case the DCI is decoded using an MsgB-radio network temporary identifier (RNTI), based on at least one condition being satisfied, transmitting a physical random access channel (PRACH) no later than a first time length after a last symbol of the PDSCH or transmitting acknowledge (ACK) information through a physical uplink control channel (PUCCH) so that a time between the last symbol of the PDSCH and a first symbol of the PUCCH is not smaller than a second time length.

2. The method of claim 1, wherein the transmitting of the PRACH no later than the first time length after the last symbol of the PDSCH or transmitting of the ACK information through the PUCCH so that the time between the last symbol of the PDSCH and the first symbol of the PUCCH is not smaller than the second time length comprises,
   transmitting the PRACH no later than the first time length after the last symbol of the PDSCH, in case a first number of PRBs allocated by the DCI is greater than a second number of PRBs corresponding to a max scheduled transmission bandwidth of the terminal, and a transport block (TB) provided by the PDSCH is not received correctly or a random access preamble identifier (RAPID) associated with PRACH transmission from the terminal is not identified.

3. The method of claim 1, wherein the transmitting of the PRACH no later than the first time length after the last symbol of the PDSCH or transmitting of the ACK information through the PUCCH so that the time between the last symbol of the PDSCH and the first symbol of the PUCCH is not smaller than the second time length comprises,
   transmitting the ACK information through the PUCCH so that the time between the last symbol of the PDSCH and the first symbol of the PUCCH is not smaller than the second time length, in case the first number of PRBs allocated by the DCI is greater than the second number of PRBs corresponding to the max scheduled transmission bandwidth of the terminal, and the PDSCH includes a success random access response (success RAR).

4. The method of claim 3, wherein the second time length is selected among a plurality of values based on SCS.

5. The method of claim 4, wherein the terminal is a device that has a limit of the max scheduled transmission bandwidth,

   wherein the plurality of values includes a first value for 15 KHz SCS and a second value for 30 KHz SCS,
   wherein the first value is larger by a first difference value than a time duration value that is applied for ACK transmission according to success RAR reception of a device without the limit of the max scheduled transmission bandwidth,
   wherein the second value is larger by a second difference value than the time duration value that is applied for ACK transmission according to success RAR reception of the device without the limit of the max scheduled transmission bandwidth, and
   wherein the first difference value is defined to be twice the second difference value.

6. The method of claim 1, wherein the transmitting of the message A comprises:

   identifying a bandwidth (BW) of a PUSCH resource for the message A through system information; and
   transmitting the message A based on the BW of the PUSCH resource for the message A being equal to or smaller than the max scheduled transmission BW of the terminal.

7. The method of claim 1, wherein the PUSCH resource is determined not to be used for a 2-step PRACH procedure based on the BW of the PUSCH resource for the message A being equal to or smaller than the max scheduled transmission BW of the terminal.

8. The method of claim 1, wherein each of the first time length and the second time length is determined based on at least one of the first number of PRBs allocated by the DCI and the second number of PRBs corresponding to the max scheduled transmission bandwidth among a plurality of values.

9. The method of claim 1, wherein the success RAR includes an indicator related to transmission timing of the ACK information, and
   wherein the indicator includes a value that is determined based on at least one of the first number of the PRBs, the second number of the PRBs, and the SCS.

10. The method of claim 1, wherein the success RAR includes the indicator related to transmission timing of the ACK information, and
    wherein a slot position of the PUCCH is determined based on a sum of an offset value received through a system information block (SIB) or the DCI and a value included in the indicator.

11. A terminal in a wireless communication system, the terminal comprising:

    a transceiver; and
    a processor coupled with the transceiver,
    wherein the processor is configured to:

    transmit a message A for a random access procedure,
    to receive downlink control information (DCI) that schedules a message B,
    to receive a physical downlink shared channel (PDSCH) scheduled by the DCI through physical resource blocks (PRBs) allocated by the DCI, and
    in case the DCI is decoded using an MsgB-radio network temporary identifier (RNTI), based on at least one condition being satisfied, to transmit a physical random access channel (PRACH) no later than a first time length after a last symbol of the PDSCH or to transmit acknowledge (ACK) information through a physical uplink control channel (PUCCH) so that a time between the last symbol of the PDSCH and a first symbol of the PUCCH is not smaller than a second time length.

12. A communication device comprising:

    at least one processor; and
    at least one computer memory coupled with the at least one processor and storing an instruction that instructs operations when executed by the at least one processor,
    wherein the operations comprises:

    transmitting a message A for a random access procedure;
    receiving downlink control information (DCI) that schedules a message B;
    receiving a physical downlink shared channel (PDSCH) scheduled by the DCI through physical resource blocks (PRBs) allocated by the DCI; and
    in case the DCI is decoded using an MsgB-radio network temporary identifier (RNTI), based on at least one condition being satisfied, transmitting a physical random access channel (PRACH) no later than a first time length after a last symbol of the PDSCH or transmitting acknowledge (ACK) information through a physical uplink control channel (PUCCH) so that a time between the last symbol of the PDSCH and a first symbol of the PUCCH is not smaller than a second time length.

13. A non-transitory computer-readable medium storing at least one instruction, the non-transitory computer-readable medium comprising the at least one instruction that is executable by a processor,
wherein the at least one instruction instructs a device to:

transmit a message A for a random access procedure,
to receive downlink control information (DCI) that schedules a message B,
to receive a physical downlink shared channel (PDSCH) scheduled by the DCI through physical resource blocks (PRBs) allocated by the DCI, and
in case the DCI is decoded using an MsgB-radio network temporary identifier (RNTI), based on at least one condition being satisfied, to transmit a physical random access channel (PRACH) no later than a first time length after a last symbol of the PDSCH or to transmit acknowledge (ACK) information through a physical uplink control channel (PUCCH) so that a time between the last symbol of the PDSCH and a first symbol of the PUCCH is not smaller than a second time length.

**FIG. 1**

200

202

206

208

First Device

Processor(s)

Transceiver(s)

Memory(s)

204

## FIG. 2

**FIG. 3**

**FIG. 4**

**FIG. 5**

**FIG. 6**

**FIG. 7**

EP 4 669 011 A1

**FIG. 8A**

**FIG. 8B**

| E/T1/T2/R/BI subheader | E/T1/RAPID subheader | fallback RAR | E/T1/T2/S/R/R/R/R subheader | successRAR | R/F/LCID/L subheader | MAC SDU |
|---|---|---|---|---|---|---|

| MAC subPDU (BI only) | MAC subPDU (fallback RAR) | MAC subPDU (successRAR) | MAC subPDU (MAC SDU) | ... | MAC subPDU (MAC SDU) | MAC subPDU including padding(opt) |
|---|---|---|---|---|---|---|

**FIG. 9**

EP 4 669 011 A1

*FallbackRAR

gNB

UE

msgA

msg3

[FallbackRAR]

| R | Timing Advance Command | | Oct 1 |
|---|---|---|---|
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |

# FIG. 10A

34

*SuccessRAR

gNB

UE msgA

Transmit HARQ-ACK

[SuccessRAR]

| | |
|---|---|
| UE Contention Resolution Identity | Oct 1 |
| UE Contention Resolution Identity | Oct 2 |
| UE Contention Resolution Identity | Oct 3 |
| UE Contention Resolution Identity | Oct 4 |
| UE Contention Resolution Identity | Oct 5 |
| UE Contention Resolution Identity | Oct 6 |

| R | R | R | TPC | HARQ feedback Timing indicator | Oct 7 |
|---|---|---|---|---|---|

| PUCCH resource indicator | Timing advance Command | Oct 8 |
|---|---|---|

| Timing advance Command | Oct 9 |
|---|---|
| C-RNTI | Oct 10 |
| C-RNTI | Oct 11 |

# FIG. 10B

START

S1101

RECEIVE MESSAGE B

S1103

DETERMINE PROCESSING
TIME FOR MESSAGE B

S1105

TRANSMIT ACK/NACK
AFTER PROCESSING TIME

END

**FIG. 11**

START

S1201

RECEIVE MESSAGE B

S1203

DETECT DCI THAT SCHEDULES MESSAGE B

S1205

IDENTIFY WHETHER OR NOT THE NUMBER
OF ALLOCATED RBS IS ALLOWED TO
EXCEED THRESHOLD BASED ON RNTI

END

**FIG. 12**

START

S1301

RECEIVE MESSAGE B

S1303

DETERMINE ACK/NACK TRANSMISSION
TIME FOR MESSAGE B

S1305

TRANSMIT ACK/NACK

END

**FIG. 13**

START

S1401

DETERMINE RACH FAILURE

S1403

DETERMINE PREAMBLE
RETRANSMISSION TIME

S1405

TRANSMIT PREAMBLE

END

**FIG. 14**

**FIG. 15**

1602

| SUL/NUL selection | ⇒ | BWP selection | ⇒ | Set of RA resource selection | ⇒ | RA type selection | ⇒ | SSB selection | ⇒ | ... |

**FIG. 16**

## INTERNATIONAL SEARCH REPORT

| International application No. |
|---|
| **PCT/KR2024/095330** |

| A. | CLASSIFICATION OF SUBJECT MATTER |
|---|---|

**H04W 74/08**(2009.01)i; **H04W 74/00**(2009.01)i; **H04W 72/04**(2009.01)i; **H04W 72/0457**(2023.01)i; **H04W 72/21**(2023.01)i; **H04W 72/23**(2023.01)i; **H04W 72/12**(2009.01)i; **H04L 27/26**(2006.01)i

According to International Patent Classification (IPC) or to both national classification and IPC

| B. | FIELDS SEARCHED |
|---|---|

Minimum documentation searched (classification system followed by classification symbols)

H04W 74/08(2009.01); H04L 1/08(2006.01); H04L 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 억세스(random access), 메시지(message), 스케줄링(scheduling), DCI(downlink control information), PRB(physical resource block), PDSCH(physical downlink shared channel), MsgB-RNTI(radio network temporary identifier), PRACH(physical random access channel), 심볼(symbol), 시간(time)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0148973 A (SAMSUNG ELECTRONICS CO., LTD.) 08 December 2021 (2021-12-08)<br>See paragraph [0028]; claims 1 and 9; and figure 1a. | 1-2,6-7,11-13 |
| A | | 3-5,8-10 |
| Y | ZTE et al. Remaining issues of the 2-step RACH procedures. R1-2000397, 3GPP TSG RAN WG1 Meeting 100, e-Meeting. 14 February 2020.<br>See page 2. | 1-2,6-7,11-13 |
| Y | ZTE et al. Discussion on further UE complexity reduction. R1-2211902, 3GPP TSG RAN WG1 111. Toulouse, France. 07 November 2022.<br>See section 2.1. | 6-7 |
| A | WO 2021-231816 A1 (CONVIDA WIRELESS, LLC) 18 November 2021 (2021-11-18)<br>See paragraphs [0003]-[0005]; and claims 1-16. | 1-13 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 May 2024** | **23 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2024/095330** |

### C.    DOCUMENTS CONSIDERED TO BE RELEVANT

| Category* | Citation of document, with indication, where appropriate, of the relevant passages | Relevant to claim No. |
|---|---|---|
| A | JP 2022-549266 A (TELEFONAKTIEBOLAGET LM ERICSSON (PUBL)) 24 November 2022 (2022-11-24)<br>See paragraphs [0004]-[0035]; and claims 1-38. | 1-13 |

Form PCT/ISA/210 (second sheet) (July 2022)

**INTERNATIONAL SEARCH REPORT**
Information on patent family members

International application No.

**PCT/KR2024/095330**

| Patent document cited in search report | | | Publication date (day/month/year) | Patent family member(s) | | | Publication date (day/month/year) |
|---|---|---|---|---|---|---|---|
| KR | 10-2021-0148973 | A | 08 December 2021 | CN | 109479317 | A | 15 March 2019 |
| | | | | CN | 109479317 | B | 23 June 2023 |
| | | | | CN | 116567832 | A | 08 August 2023 |
| | | | | CN | 116684974 | A | 01 September 2023 |
| | | | | EP | 3471491 | A1 | 17 April 2019 |
| | | | | EP | 3471491 | B1 | 06 October 2021 |
| | | | | EP | 3955687 | A1 | 16 February 2022 |
| | | | | EP | 3955687 | B1 | 21 June 2023 |
| | | | | EP | 4236561 | A2 | 30 August 2023 |
| | | | | EP | 4236561 | A3 | 18 October 2023 |
| | | | | KR | 10-2018-0007648 | A | 23 January 2018 |
| | | | | KR | 10-2018-0007653 | A | 23 January 2018 |
| | | | | KR | 10-2332992 | B1 | 01 December 2021 |
| | | | | US | 11202235 | B2 | 14 December 2021 |
| | | | | US | 11653272 | B2 | 16 May 2023 |
| | | | | US | 2019-0239123 | A1 | 01 August 2019 |
| | | | | US | 2022-0095172 | A1 | 24 March 2022 |
| | | | | US | 2023-0284098 | A1 | 07 September 2023 |
| | | | | WO | 2018-012899 | A1 | 18 January 2018 |
| WO | 2021-231816 | A1 | 18 November 2021 | CN | 115553043 | A | 30 December 2022 |
| | | | | EP | 4151038 | A1 | 22 March 2023 |
| | | | | US | 2023-0188261 | A1 | 15 June 2023 |
| JP | 2022-549266 | A | 24 November 2022 | CN | 114451058 | A | 06 May 2022 |
| | | | | EP | 4035488 | A1 | 03 August 2022 |
| | | | | MX | 2022003411 | A | 18 April 2022 |
| | | | | US | 2022-0369376 | A1 | 17 November 2022 |
| | | | | WO | 2021-057793 | A1 | 01 April 2021 |

Form PCT/ISA/210 (patent family annex) (July 2022)